# EUROPÄISCHE PATENTSCHRIFT

(11) **EP 3 507 681 B1**
(45) Veröffentlichungstag und Bekanntmachung des Hinweises auf die Patenterteilung: **06.09.2023**
(21) Anmeldenummer: 17751319.9
(22) Anmeldetag: 27.07.2017
(51) Int. Cl.: B60K 35/00, G06F 3/0488, B60K 37/06, G06F 3/01, H04N 13/30

(54) **VERFAHREN ZUR INTERAKTION MIT BILDINHALTEN, DIE AUF EINER ANZEIGEVORRICHTUNG IN EINEM FAHRZEUG DARGESTELLT WERDEN**
METHOD FOR INTERACTING WITH IMAGE CONTENTS DISPLAYED ON A DISPLAY DEVICE IN A VEHICLE
PROCÉDÉ D'INTERACTION AVEC DES CONTENUS D'IMAGE QUI SONT REPRÉSENTÉS SUR UN DISPOSITIF D'AFFICHAGE DANS UN VÉHICULE

(30) Priorität: 01.09.2016 DE 102016216577
(43) Veröffentlichungstag der Anmeldung: 10.07.2019
(73) Patentinhaber: Volkswagen Aktiengesellschaft, 38440 Wolfsburg (DE)
(72) Erfinder: TÜMLER, Johannes, 39167 Wellen (DE); TEMMING, Carsten, 38106 Braunschweig (DE); SCHÄFER, Helge, 31275 Lehrte (DE)
(86) Internationale Anmeldenummer: PCT/EP2017/069072
(87) Internationale Veröffentlichungsnummer: WO 2018/041489

(56) Entgegenhaltungen:
- EP-A2- 2 896 531
- WO-A1-2013/015466
- DE-A1-102011 112 563
- US-A1- 2012 120 066
- US-A1- 2013 285 970
- US-A1- 2015 363 070

## Beschreibung

### Gebiet der Erfindung

Die vorliegende Erfindung betrifft ein Verfahren zur Interaktion mit Bildinhalten, die auf einer Anzeigevorrichtung in einem Fahrzeug dargestellt werden und eine Vorrichtung zur Durchführung des Verfahrens.

### Hintergrund der Erfindung

Ein aktueller Trend in der Displaytechnologie ist die "Stereo-3D-Fähigkeit", bei welcher der Betrachter je Auge ein leicht unterschiedliches Bild erhält um damit eine räumliche Tiefe des Bildes zu suggerieren. Hierbei gibt es beim sogenannten Statischen 3D (S3D) einen idealen Betrachtungspunkt für den besten Stereoeindruck, andere Verfahren ermöglichen mehrere ideale Betrachtungspunkte (Multiview 3D) oder sogar im Rahmen der Lichtfeldtechnik eine große Anzahl (idealerweise unendlich viele) Betrachtungspunkte für eine stereoskopische Anzeige.

Verschiedene 3D-Display -Technologien kommen hierbei zum Einsatz. So werden bei autostereoskopischen Displays zur Erzeugung eines dreidimensionalen Eindrucks zwei Bilder gleichzeitig dargestellt, wobei mittels Linsenraster oder Parallaxbarrieren das Licht einzelner Pixel in verschiedene Richtungen vor dem Bildschirm abgelenkt wird und die beiden Augen jeweils ein anderes Bild erreicht. Ebenso können zur Erzeugung eines Tiefeneindrucks andere Displaytypen eingesetzt werden, wie beispielsweise Multi-Layer-Displays, bei denen mehrere Displayebenen übereinander angeordnet sind, oder Lichtfelddisplays, bei denen ein Mikrolinsenraster genutzt wird um ein Bild in einzelne Lichtstrahlen aufzuteilen und auf unterschiedliche Tiefen fokussieren zu können.

In der Fahrzeugtechnik kommen vermehrt Displays für volldigitale Kombiinstrumente oder auch in der Mittelkonsole angeordnete Multifunktionsdisplays zum Einsatz. Bisher erfolgt hier üblicherweise eine zweidimensionale Darstellung beispielsweise von Rundinstrumenten wie Tacho oder Drehzahlmesser, Anzeigen für Außentemperatur, Uhrzeit, Kilometerstände sowie Warn- und Hinweissymbole aber auch für zusätzliche Funktionen im Infotainmentbereich wie Navigation oder Telefon. Es ist jedoch davon auszugehen, dass zukünftig auch hier 3D-Displays Verwendung finden werden, da durch die dann wahrgenommene Tiefe des Bildes visuelle Informationen im Raum verteilt dargestellt werden können. Der Einsatz eines autostereoskopischen Displays für eine dreidimensionale Darstellung einer Kraftfahrzeug-Instrumententafel wird in der GB 2517793 A beschrieben, wobei eine Priorisierung der dargestellten Information in der Form erfolgt, dass für den Fahrer wichtige Informationen im Vordergrund und für den Fahrer nicht so wichtige Funktionen im Hintergrund dargestellt werden.

Die US 2015/363070 A1 offenbart ein Verfahren zur Interaktion mit einem virtuellen 3D-Bild, das einem Benutzer mittels einer 3D-Anzeigevorrichtung präsentiert wird und aktivierbare Objekte enthält. Hierbei wird mit einem Bildsensor festgestellt, wenn der Benutzer ein aktivierendes Objekt, wie z. B. eine Hand oder einen Finger, im dreidimensionalen Raum an einer Stelle platziert hat, an der sich aus seiner Sicht ein aktivierbares Objekt befindet, oder eine auf ein aktivierbares Objekt bezogene Geste ausgeführt hat. Hierbei kann eine Aktivierung eines aktivierbaren Objekts auf unterschiedlichste Weisen, wie beispielsweise durch das Auftreten einer Vertiefung in dem aktivierbaren Objekt wiedergegeben. US 2013/285970 A1 offenbart einen Berührungssensor, der in der Lage ist, gleichzeitig einen Druck und eine Position zu messen, indem er Graphen durch Veränderung des Widerstands verwendet.

3D-Displays, die nicht nur zur reinen Informationswiedergabe sondern auch zur Bedienung von Geräten im Fahrzeug dienen könnten, würden durch eine Darstellung von Bedienelementen in unterschiedlicher Tiefe neue Bedienkonzepte für den Benutzer ermöglichen. Hierfür wäre jedoch eine Interaktion mit den räumlich unterschiedlich weit entfernt dargestellten Bedienelementen erforderlich.

### Zusammenfassung der Erfindung

Es ist eine Aufgabe der Erfindung, eine Möglichkeit zur Interaktion mit Bedienelementen, die auf einem 3D-Display in unterschiedlicher Tiefe dargestellt werden, zur Verfügung zu stellen. Diese Aufgabe wird durch ein Verfahren mit den Merkmalen des Anspruchs 1, sowie durch eine entsprechende Vorrichtung gemäß Anspruch 5 gelöst. Bevorzugte Ausgestaltungen der Erfindung sind Gegenstand der abhängigen Ansprüche.

Die Erfindung wird durch die unabhängigen Ansprüche definiert. Die abhängigen Ansprüche definieren vorteilhafte Ausführungsformen.

### Kurze Beschreibung der Figuren

- Fig. 1: zeigt schematisch das erfindungsgemäße Verfahren zur Interaktion mit Bildinhalten, die auf einer Anzeigevorrichtung in einem Fahrzeug dargestellt werden;
- Fig. 2: zeigt schematisch für die Bedienhandlung des Nutzers mittels Geste die Unterscheidung der Tiefenebene vor der Anzeigevorrichtung;
- Fig. 3: zeigt die Anordnung im Fahrzeuginnenraum für das Ausführungsbeispiel aus Fig. 2.

### Detaillierte Beschreibung der Ausführungsformen

Zum besseren Verständnis der Prinzipien der vorliegenden Erfindung werden nachfolgend Ausführungsformen der Erfindung anhand der Figuren detaillierter erläutert. Die Erfindung wird durch die unabhängigen Ansprüche definiert. Die abhängigen Ansprüche definieren vorteilhafte Ausführungsformen.

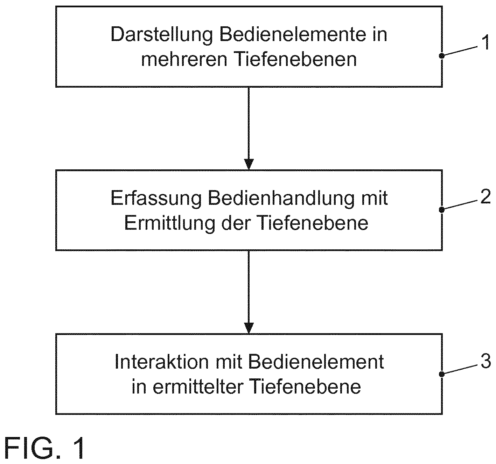

Fig. 1 zeigt schematisch ein Verfahren zur Interaktion mit Bildinhalten, die auf einer Anzeigevorrichtung in einem Fahrzeug dargestellt werden. Bei der Anzeigevorrichtung handelt es sich hierbei um ein 3-D-Display, auf dem in einem ersten Schritt 1 Bildinhalte mit einem räumlichen Eindruck von Tiefe dargestellt werden. Die Bildinhalte umfassen hierbei Bedienelemente, die in mehr als einer Tiefenebene dargestellt werden. In einem zweiten Schritt 2 wird eine Bedienhandlung eines Nutzers mittels mindestens einem im Fahrzeug vorgesehenen Sensor erfasst. Hierbei wird ermittelt, in welcher Tiefenebene ein Bedienelement bedient werden soll und, falls mehrere Bedienelemente in der ermittelten Tiefenebene vorhanden sind, mit welchem dieser Bedienelemente eine Interaktion erfolgen soll. In einem dritten Schritt 3 erfolgt dann eine Interaktion mit dem ermittelten Bedienelement in der ermittelten Tiefenebene entsprechend der erfassten Bedienhandlung. Gemäß einer ersten Ausführungsform erfolgt eine Interaktion mit den Bedienelementen mithilfe eines berührungsempfindlichen Flachbildschirms, auch Touchscreen genannt. Bei einem solchen Touchscreen kann durch Antippen von Teilen eines dargestellten Bildes mit einem Finger ein technischen Gerät gesteuert werden. Bei den aus dem Stand der Technik bekannten Touchscreens ist jedoch eine räumliche Interaktion mit 3D-Inhalten nicht möglich, da eine Bedienung auf der zweidimensionalen Oberfläche des Touchscreens und damit nicht an der räumlichen Koordinate des visuell wahrgenommenen 3D-Objektes stattfindet. Erfindungsgemäß wird nun eine räumliche Interaktion mit 3D-Inhalten ermöglicht, indem der Nutzer in Abhängigkeit von der von ihm ausgeübten Druckstärke auf die Displayoberfläche mit verschiedenen Tiefenebenen interagieren kann. Die Druckstärke kann hierbei beispielsweise durch Auswertung der Fläche, die der Finger auf dem Touchscreen einnimmt (kleine Fläche: vorn; große Fläche: hinten) ermittelt werden. Ebenso kann die Druckstärke auch durch die Messung von Kapazitätsänderungen durch Abstandsänderung verschiedener Layer des Displays erfolgen. Bei einem Pseudostereo 2-Layer Display kann z.B. bei leichtem Druck mit der ersten Ebene, bei starkem Druck mit der zweiten Ebene interagiert werden. Bei anderen Displaytechnologien ist auch ein fließender Übergang zwischen mehr als 2 Tiefenebenen im dreidimensionalen Raum bei stetiger Zu-/ Abnahme der Druckstärke bzw. Fläche des Fingers auf dem Touchscreen möglich. Statt oder zusätzlich zur Ermittlung der Druckstärke kann auch die zeitliche Länge der Berührung des Touchscreens ausgewertet werden. Ein visuelles Feedback (z.B. in Form eines Pointers) in der entsprechenden Tiefe erhöht die Kontrollierbarkeit der Interaktion. Ebenso ist ein haptisches Feedback mithilfe von einer Displayvibration denkbar.

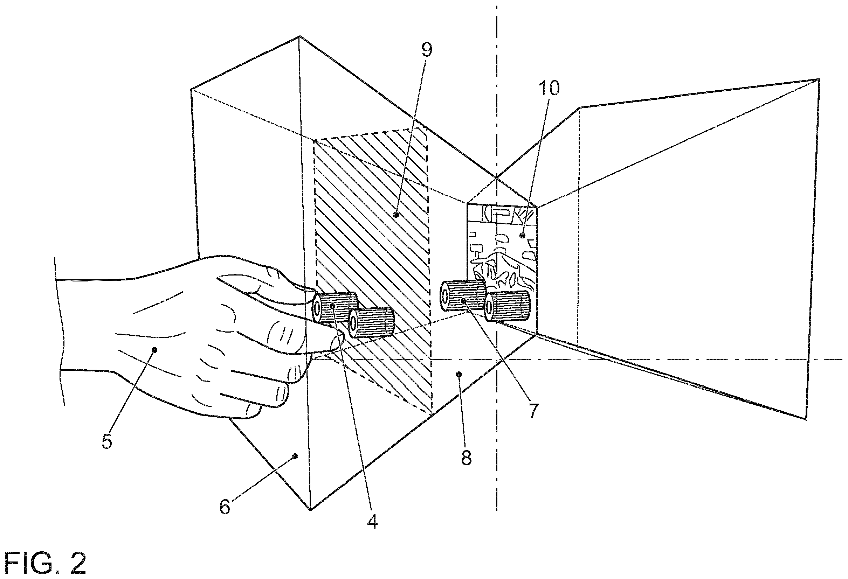

Gemäß einer zweiten Ausführungsform erfolgt eine Interaktion mit den Bedienelementen mittels eines Gestensensors, der im Fahrzeug angeordnet ist. Hierbei ist, wie in Figur 2 schematisch dargestellt, eine virtuelle Fläche 9 im Fahrzeuginnenraum vor dem Display 10 vorgesehen, die zur Unterscheidung von zwei verschiedenen Tiefenebenen dient. Dieses wird ermöglicht, indem mit dem Gestensensor detektiert wird, ob sich eine Hand oder ein Handteil 5 des Nutzers vor oder hinter dieser virtuellen Fläche 9 befindet. Beispielsweise kann bei einem stereoskopischen Display diese virtuelle Fläche der 2D-Nullebene des stereoskopischen Displays zugeordnet sein. Bei Detektion der Hand oder des Handteils 5 des Nutzers im räumlichen Bereich 8 zwischen dieser virtuellen Fläche und der Oberfläche des stereoskopisches Displays kann eine Interaktion mit einem hinter der Oberfläche des stereoskopisches Displays erscheinenden Bedienelement erfolgen. Bei Detektion der Hand oder des Handteils des Nutzers im räumlichen Bereich 6 vor dieser virtuellen Fläche erfolgt stattdessen eine Interaktion mit einem vor der Oberfläche des stereoskopisches Displays erscheinenden Bedienelement. Im dargestellten Beispiel erscheinen zwei Regler so, als würden sie aus dem Display hervortreten. Die Bedienung des links dargestellten Reglers 7 erfolgt daher in dem Raum vor der virtuellen Fläche 9 an der Position 4.

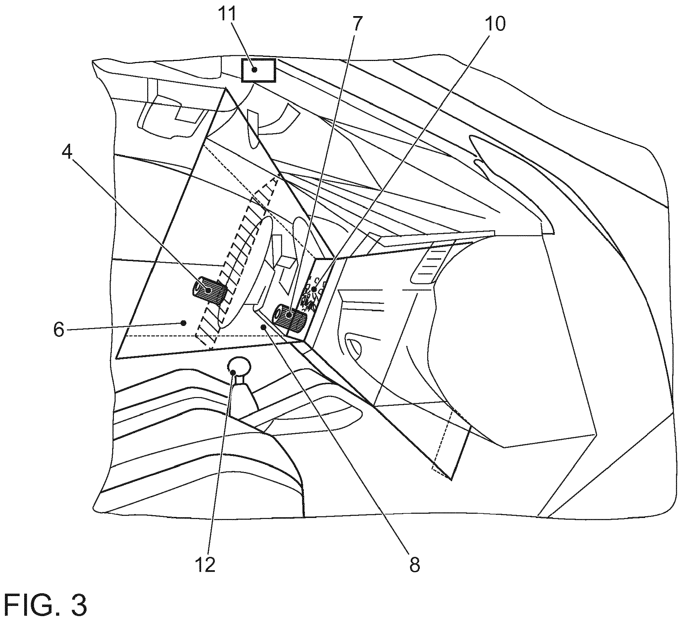

Figur 3 zeigt schematisch einen Teil des Fahrzeuginnenraums bei Verwendung dieser Ausführungsform. Die virtuelle Fläche befindet sich hierbei in etwa auf Höhe des Gangwahlhebels 12. Ein Gestensensor 11 ist in diesem Beispiel am Dachhimmel im Bereich des Rückspiegels verbaut, kann aber ebenso auch im Armaturenbrett oder der Mittelkonsole angeordnet sein. Ebenso können gegebenenfalls mehrere Gestensensoren vorgesehen sein.

Der Gestensensor 11 kann beispielsweise mittels einer Kamera die Position der Hand bzw. Finger des Fahrers detektieren. Hierzu kann auch eine Beleuchtung beispielsweise mit Infrarotlicht erfolgen. Vorzugsweise wird hierbei ein 3D-Kamerasystem, insbesondere eine TOF-Kamera (Time Of Flight) eingesetzt, mit der Distanzen zu den einzelnen Bildpunkten ermittelt werden können. Damit ist es möglich dreidimensionale Bilddaten zu erzeugen und so Handteile wie einzelne Finger der Hand unterscheiden zu können und ihre Position im Raum zu ermitteln.

Die von der Kamera generierten Bild- bzw. Videodaten werden in einer Videoverarbeitungseinheit zunächst vorverarbeitet und dann einer Bildanalyse-Einheit zugeführt. Im Anschluss erfolgt dann bei Detektion einer Hand bzw. einzelner Finger des Fahrers eine Erkennung der Geste, wobei verschiedene vordefinierte Bediengesten vorgesehen sein können und dann zunächst ermittelt werden muss, welches dieser vordefinierten Bediengesten vorliegt. Hierfür kann ein Vergleich mit den verschiedenen vorgesehenen Bediengesten in einer Datenbank vorgenommen werden, wobei direkt ein Vergleich der Bilddaten der aufgenommenen Hand- bzw. Fingeranordnung mit entsprechenden Darstellungen in der Datenbank erfolgen kann oder zunächst mithilfe eines Hand- bzw. Fingermodells eine Abstraktion vorgenommen werden kann um dann einen Vergleich durchzuführen. Es kann hierbei insbesondere auch die relative Fingerstellung mehrerer Finger zueinander erkannt und ausgewertet werden. Weiterhin kann vorgesehen sein, dass die Gestenerkennung nur dann aktiviert wird wenn sich die Hand des Nutzers in einem vordefinierten Bereich vor dem 3-D Display findet. Aus der Position der Hand bzw. der Finger der Hand relativ zu der Displayoberfläche kann hierbei im Fall mehrere Bedienelemente in der gleichen Tiefenebene bestimmt werden, welches der Bedienelemente bedient werden soll. Wenn sowohl die Bediengesten als auch das zu betätigende Bedienelement ermittelt worden sind kann dann in Abhängigkeit hiervon eine Bedienung eines Gerätes im Kraftfahrzeug wie beispielsweise des Navigationsgeräts, des Telefons oder des Radios erfolgen. Die Bedienung mittels der Gestenerkennung kann dann beispielsweise beendet werden, indem die Hand des Nutzers aus dem vordefinierten Bereich vor dem 3-D Display entfernt wird.

Ebenso ist es möglich, Bedienelemente oder auch eine komplette Interaktionsebene erst bei Detektion einer Annäherung der Hand durch den Gestensensor visuell sichtbar zu machen oder ihre bildliche Darstellung in der Tiefe räumlich zu verschieben. Dadurch kann ein Teil der dargestellten Informationen im Hintergrund verbleiben während die Bedienelemente weiter nach vorn wechseln. Wenn mittels des Gestensensors erkannt wird, dass die Hand wieder aus dem Interaktionsbereich verschwindet, werden die Bedienelemente bzw. die Interaktionsebene wieder ausgeblendet oder es wird die räumliche Verschiebung rückgängig gemacht, sodass die Darstellung wieder am Darstellungsort in der ursprünglichen Tiefe erfolgt werden.

Ein visuelles Feedback für den Nutzer, welches verdeutlicht, in welcher Tiefenebene zur Zeit eine Bedienhandlung des Nutzers erfasst wird, kann die Kontrollierbarkeit der Interaktion erhöhen. Dies kann bei den verschiedenen Ausführungsformen z.B. in Form eines dargestellten Punkts oder Pointers an der aktuellen Position in der entsprechenden Tiefe erfolgen. Im Fall der Gestenerkennung kann ebenso eine schematische Darstellung einer Hand, gegebenenfalls mit den detektierten Fingerpositionen, erfolgen. Auch wenn bei der Gestenerkennung der Nutzer, anders als bei der Bedienung mittels Touchscreens, keinen physischen Kontakt mit der Displayoberfläche hat, ist dennoch statt oder zusätzlich zu einem visuellen Feedback ein haptisches Feedback denkbar. Hierfür können mittels eines Ultraschallsenders in der Luft kleine, aber spürbare Schwingungen erzeugt werden, mit denen sich Geometrien im Raum erspüren lassen.

Die Interaktion mittels eines Gestensensors ist nicht zwei Tiefenebenen beschränkt, vielmehr können auch Bedienelemente in mehr als zwei Interaktionsebenen angeordnet sein. Hierfür wird der Bereich vor dem 3-D Display durch mehrere virtuelle Flächen in mehrere Teilbereiche unterteilt, wobei mit dem Gestensensor detektiert wird, in welchem Teilbereich sich die Hand oder der Handteil 5 des Nutzers befindet.

Gemäß einer weiteren Ausführungsform kann eine Interaktion mit den Bedienelementen durch Bedienelemente am Lenkrad erfolgen. So kann beispielsweise ein 3D-Cursors mittels Lenkradtasten oder Lenkrad-Touch-Flächen gesteuert werden, wobei die aktuelle Bedienposition angezeigt wird. Hierbei kann beispielsweise die Position in der X-Y-Ebene mit einem Steuerkreuz angesteuert werden und die Tiefenposition in Z-Richtung mittels eines Schiebereglers eingestellt werden. Ebenso kann beispielsweise durch die Bedienelemente einer Ebene getoggelt werden und durch Druck auf einen Schieberegler oder Knopf durch die Ebenen geschaltet werden. Hierbei erfolgt dann eine visuelle Markierung der jeweils aktiven Ebene.

Schließlich kann auch eine Kombination der oben genannten Bedienmodalitäten vorgesehen sein. So kann beispielsweise eine Bedienhandlung mit einer Betätigung des Touchscreens begonnen und dann mittels Geste im Raum vor der Anzeigevorrichtung fortgeführt werden. Ebenso ist es auch denkbar, die Bedienhandlung zunächst mit einer Geste zu starten und dann mittels des Touchscreens fortzuführen.

### Bezugszeichenliste

- 1: Erster Verfahrensschritt mit Darstellung der Bedienelemente in mehreren Tiefenebenen
- 2: Zweiter Verfahrensschritt mit Erfassung der Bedienhandlung mit Ermittlung der Tiefenebene
- 3: Dritter Verfahrensschritt mit Interaktion mit Bedienelement in ermittelter Tiefenebene
- 4: Bedienposition eines dargestellten Reglers
- 5: Hand des Nutzers
- 6: räumlicher Bereich, in dem mit vor der Displayoberfläche erscheinenden Bedienelementen interagiert werden kann
- 7: Anzeigeposition eines dargestellten Reglers
- 8: räumlicher Bereich, in dem mit hinter der Displayoberfläche erscheinenden Bedienelementen interagiert werden kann
- 9: virtuelle Ebene entsprechend der Nullebene des Displays
- 10: Display
- 11: Gestensensor
- 12: Gangwahlhebel

## Patentansprüche

1. Verfahren zur Interaktion mit Bildinhalten, die auf einer Anzeigevorrichtung (10) in einem Fahrzeug dargestellt werden, wobei für eine Bedienhandlung des Nutzers im Fahrzeug ein Touchscreen vorgesehen ist und das Verfahren die folgenden Schritte umfasst:
- Darstellen (1) von Bildinhalten mit einem räumlichen Eindruck von Tiefe, wobei die Bildinhalte Bedienelemente umfassen, die in mehr als einer Tiefenebene dargestellt werden;
**gekennzeichnet durch**
- Erfassen (2) einer durch den Nutzer auf die Displayoberfläche des Touchscreens ausgeübten Druckstärke bei einer Bedienhandlung;
- Ermitteln in Abhängigkeit von der erfassten Druckstärke, in welcher Tiefenebene der verschiedenen Tiefenebenen ein Bedienelement bedient werden soll;
- Interagieren (3) mit einem dargestellten Bedienelement in der in Abhängigkeit von der Druckstärke ermittelten Tiefenebene.

2. Verfahren nach Anspruch 1, wobei die Anzeigevorrichtung (10) als Touchscreen ausgebildet ist.

3. Verfahren nach Anspruch 1 oder 2, wobei für die Bedienhandlung des Nutzers sowohl ein Touchscreen als auch ein Gestensensor vorgesehen ist, wobei ein Teil der Bedienhandlung mittels des Touchscreens und ein weiterer Teil mittels des Gestensensors erfolgt.

4. Verfahren nach einem der vorhergehenden Ansprüche, wobei ein visuelles und/oder haptisches Feedback die aktuelle Tiefenebene und ggfs. die aktuelle Position innerhalb der Tiefenebene signalisiert.

5. Vorrichtung zur Durchführung eines Verfahrens nach einem der vorhergehenden Ansprüche.

6. Kraftfahrzeug mit einer Vorrichtung nach Anspruch 5.

## Claims

1. Method for interacting with image contents displayed on a display device (10) in a vehicle, a touch screen being provided for an operating action of the user in the vehicle and the method comprising the following steps:
- displaying (1) image contents with a spatial impression of depth, the image contents comprising control elements which are shown in more than one depth plane;
**characterized by**
- detecting (2) an amount of pressure applied to the display surface of the touch screen by the user in an operating action;
- determining, on the basis of the detected amount of pressure, in which depth plane of the different depth planes a control element is to be used;
- interacting (3) with a displayed control element in the depth plane determined on the basis of the amount of pressure.

2. Method according to claim 1, wherein the display device (10) is designed as a touch screen.

3. Method according to either claim 1 or claim 2, wherein, for the operating action of the user, both a touch screen and a gesture sensor are provided, wherein one part of the operating action takes place by means of the touch screen and a further part takes place by means of the gesture sensor.

4. Method according to claim any of the preceding claims, wherein visual and/or haptic feedback signals the current depth plane and optionally the current position within the depth plane.

5. Device for carrying out a method according to any of the preceding claims.

6. Motor vehicle having a device according to claim 5.

## Revendications

1. Procédé d'interaction avec des contenus d'image, qui sont représentés sur un dispositif d'affichage (10) dans un véhicule, dans lequel un écran tactile est prévu pour une action de commande de l'utilisateur dans le véhicule et le procédé comprend les étapes suivantes :
- représentation (1) des contenus d'image avec une impression spatiale de profondeur, dans laquelle les contenus d'image comprennent des éléments de commande, qui sont représentés dans plus d'un plan de profondeur ;
**caractérisé par**
- la détection (2) d'une force de pression appliquée par l'utilisateur sur la surface d'affichage de l'écran tactile lors d'une action de commande ;
- la détermination, en fonction de la force de pression détectée, du plan de profondeur parmi les différents plans de profondeur dans lequel un élément de commande doit être commandé ;
- l'interaction (3) avec un élément de commande représenté dans le plan de profondeur déterminé en fonction de la force de pression.

2. Procédé selon la revendication 1, dans lequel le dispositif d'affichage (10) est conçu comme un écran tactile.

3. Procédé selon la revendication 1 ou 2, dans lequel pour l'action de commande de l'utilisateur, aussi bien un écran tactile qu'un capteur de gestes sont prévus, dans lequel une partie de l'action de commande est effectuée au moyen de l'écran tactile et une autre partie au moyen du capteur de gestes.

4. Procédé selon l'une quelconque des revendications précédentes, dans lequel une rétroaction visuelle et/haptique signale le plan de profondeur réel et le cas échéant la position réelle à l'intérieur du plan de profondeur.

5. Dispositif pour la réalisation d'un procédé selon l'une quelconque des revendications précédentes.

6. Véhicule automobile comportant un dispositif selon la revendication 5.
